# EUROPEAN PATENT APPLICATION

(11) **EP 2 383 965 A1**
(43) Date of publication of application: **02.11.2011**
(21) Application number: 11160984.8
(22) Date of filing: 04.04.2011
(51) Int. Cl.: H04M 1/04, A45C 11/38, H04B 1/38

(54) **Combination of protective casing and stand for portable handheld electronic device**

(30) Priority: 28.04.2010 HK 10104171
(71) Applicant: SwitchEasy Limited, Room 314, Sing Win Factory Building Kwun Tong, Kowloon, Hong Kong (CN)
(72) Inventor: Bau, Chi Vun Steven, Hong Kong (CN)
(74) Representative: Johansson, Lars E.

(57) **Abstract**

A combination of protective casing and stand for portable handheld electronic device comprising a base and a cover pivotably connected to the cover, in which an inner space is formed between the base and the cover for containing the electronic device, and the cover could be pivoted with respect to the base to make the combination to form a configuration at least including a triangle in a cross section taken along a central line of the combination.

## Description

### FIELD OF THE INVENTION

The present invention generally relates to a combination of protective casing and stand for portable handheld electronic device.

### BACKGROUND OF THE INVENTION

Due to the convenience for use, portable handheld electronic devices, such as Apple iPhone, personal digital assistant (PDA), digital media players, digital recorders, potable TV, handheld computers, etc., are more and more popular in modem life.

As such an electronic device is covered with smooth and beautiful surface with delicate finish, when the electronic device is not in use, a protective casing is needed to contain the electronic device to prevent the delicate finish of the electronic device from being damaged.

When the electronic device is in use, a user usually holds the electronic device with one hand, and operates the same with the other hand. However, after operation on the electronic device is finished, the user would generally put down the electronic device and let the same operate automatically. For example, after operation on a digital media player is finished, the user would put down the player and let it play songs automatically. But, if the electronic device is put directly on a desk, the delicate finish of the electronic device would also be subject to deterioration or damage. Besides, due to the smooth surface of the electronic device, there is a risk that the electronic device would slide off from the desk to incur a serious damage. Therefore, a stand is needed to support the electronic devices stably.

Furthermore, to demonstrate the new functions of such portable handheld electronic devices to potential customers, stands for supporting the electronic devices are also demanded.

Although there are some kinds of protective casings and stands available in the market, such protective casings and stands are separated from each other and the traditional stands are unfoldable and would occupy a lot of space. Thus, it would be costly for providing a protective casing and a stand for a electronic device, and would be inconvenient for use.

Therefore, it is desirable to combine a protective casing and a stand to form a combination of protective casing and stand for portable handheld electronic devices, which could be used as a protective casing for protecting the electronic devices when in a folded state, and could also be used as a stand for supporting the electronic devices when in a unfolded state.

### SUMMARY OF THE INVENTION

To overcome the above-mentioned shortcomings, the present invention aims to provide a combination of protective casing and stand for portable handheld electronic device, which may comprise a base and a cover pivotably connected to the base, in which an inner space is formed between the base and the cover for containing the electronic device, and the cover could be pivoted with respect to the base to make the combination to form a configuration at least including a triangle in a cross section taken along a central line of the combination.

In one embodiment of the present invention, the combination may be in form of a pocket, and the cover comprises a fixed part attached to the base fixedly and being pivotable together with the corresponding part of the base with respect to the rest of the base and a free part covering the base and being pivotable with respect to the base freely.

Preferably, at least one first fastener may be formed between the base and the free part of the cover for fastening the base and the free part selectively. A tab may extend outwards from the base at an end of the fixed part of the cover, and at least one second fastener may be formed between the tab and the fixed part of the cover for fastening the tab and the fixed part selectively.

In addition, the part of the first fastener formed on the free part of the cover could be engaged with the part of the second fastener formed on the tab, to fasten the free part of the cover and the tab selectively.

Preferably, one or more ribs may be formed on the base where is covered by the free part of the cover.

In another embodiment of the present invention, the combination may be in form of a box, and the cover is pivotably connected to the base at one edge thereof and a protrusion is formed on an edge of the cover opposite to the edge connected to the base, in which the height of the protrusion is larger than the thickness of the cover.

Preferably, a recess may be formed at an edge of the base for containing the protrusion when the cover is closed to the base, and a texture may be formed on an outer surface of the cover.

In a further embodiment of the present invention, the combination may be in form of a box, and one or more pairs of grooves are formed on an outside surface of the base and each of the pairs is used for receiving the two side edges of the cover. In this connection, the cover is made of flexible materials.

Preferably, a pair of notches may be formed on an inner surface of the cover and each of the notches extends from an individual corner of the cover adjacent to the edge of the cover connected to the base to a middle part of an opposite edge of the cover, in which the thickness of the cover in the notches is relatively thinner than the other part of the cover.

In the above embodiments, the base and the cover may be provided with a plurality matching openings for external access to buttons, switches and/or ports on the electronic device.

### BRIEF DESCRIPTION OF THE DRAWINGS

The present invention will be described in details with reference to the accompanying drawings, in which:
Fig.1 is a perspective view of a first embodiment of the combination of protective casing and stand for portable handheld electronic device according to the present invention, illustrating a state of the same as a protective casing;
Fig. 2 is a side view of the first embodiment shown in Fig. 1;
Fig. 3 is a perspective view of the first embodiment shown in Fig. 1 illustrating how to open the same;
Fig. 4 is another perspective view of the first embodiment, illustrating a state of the same as a stand;
Fig. 5 is a perspective view of a second embodiment of the combination of protective casing and stand for portable handheld electronic device according to the present invention, illustrating a state of the same as a protective casing;
Fig. 6 is another perspective view of the second embodiment, illustrating a state of the same as a stand;
Fig. 7 is a side view of the second embodiment shown in Fig. 6;
Fig. 8 is a perspective view of a third embodiment of the combination of the protective casing and stand for portable handheld electronic device according to the present invention, illustrating a state of the same as a protective casing;
Fig. 9 is a rear view of the third embodiment shown in Fig. 8;
Fig. 10 is a perspective view of the third embodiment, illustrating a state of the same as a stand;
Fig. 11 is another perspective view of the third embodiment shown in Fig. 10 illustrating an arrangement of the stand; and
Fig. 12 is a perspective view of the third embodiment illustrating a state of the same as a stand, in which the stand is in another arrangement different from that in Fig. 11.

### DETAILED DESCRIPTION OF THE INVENTION

The aspects, features and advantages of the present invention will be better understood by those skilled in the art from the detailed description of the embodiments of the invention in conjunction with the accompanying drawings. Exemplary embodiments of the present application and the description thereof are for illustration purpose only, and should not be construed as limitation to the protective scope of the present invention.

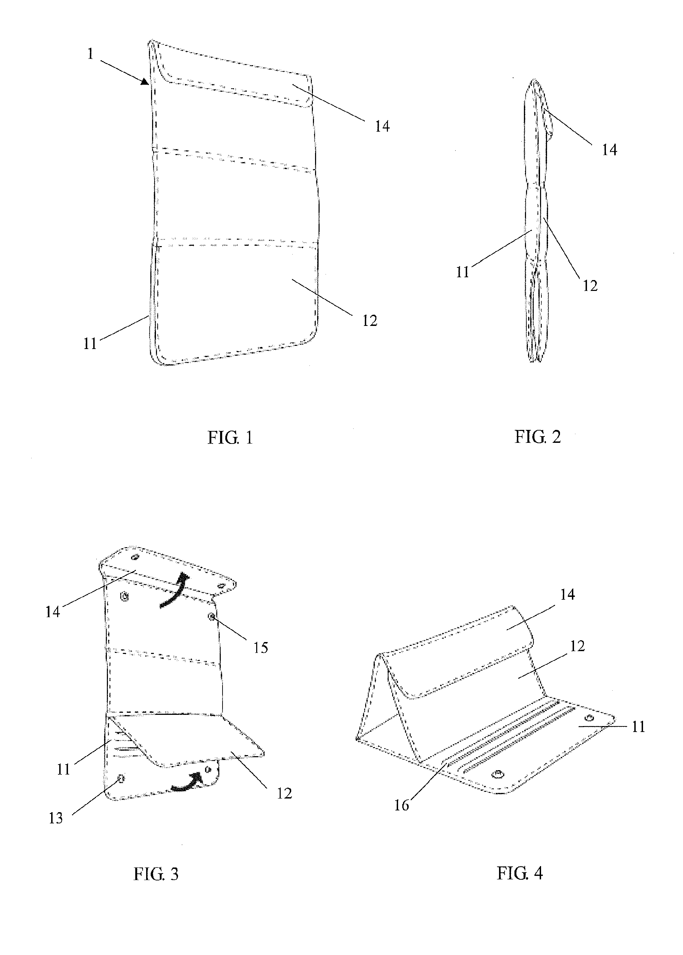

As shown in Fig. 1, the first embodiment 1 of the combination of protective casing and stand for portable handheld electronic device of the present invention is in form of a pocket, which comprises a base 11 and a cover 12. A part of the cover 12 is attached to the base 11 fixedly, while the other part of the cover 12 covers the base 11 and could be pivoted with respect to the base freely. An inner space is formed between the base 11 and the cover 12, to contain a portable handheld electronic device (not shown in the figures) therein.

To avoid the opening of the free part of the cover 12 accidentally, one or more first fasteners 13 could be formed between the base 11 and the free part of the cover 12, as shown in Fig. 3. The first fastener 13 could be, for example a button, a zipper, a Velcro, or other suitable means. When the first embodiment 1 is used as a protective casing, the first fastener 13 on the cover 12 and base 11 is engaged, to avoid the opening of the free part of the cover 12 and prevent the electronic device contained in the inner space from sliding out.

As shown in Figs. 1-3, a tab 14 extends outwards from the base 11 on the end of the fixed part of the cover 12. One or more second fasteners 15 could be formed between the tab 14 and the fixed part of the cover 12. Similarly, the second fastener 15 could be, for example a button, a zipper, a Velcro, or other suitable means. When the first embodiment 1 is used as a protective casing, the second fastener 15 on the tab 14 and the fixed part of the cover 12 is engaged. Preferably, in this embodiment, the part of the first fastener 13 formed on the free part of the cover 12 could be engaged with the part of the second fastener 15 formed on the tab 14, to fasten the free part of the cover and the tab selectively.

As shown in Figs. 3 and 4, when the first embodiment 1 needs to be changed to a stand, the first fastener 13 is disengaged and the free part of the cover 12 is pivoted with respect to the base 11 to be opened with respect to the latter, and then the second fastener 15 is disengaged and the tab 14 is opened with respect to the fixed part of the cover 12. Then, the fixed part of the cover 12 together with the corresponding part of the base 11 is folded towards the free part of the cover 12. Finally, the part of the second fastener 15 formed on the tab 14 is engaged to the part of the first fastener 13 formed on the free part of the cover 12. Therefore, the first embodiment 1 forms a configuration at least including a triangle in a cross section taken along a longitudinal central line of thereof. As a result, a stable stand is formed for supporting the electronic device.

To prevent the electronic device from sliding off from the base 11, one or more ribs 16 could be formed on the base 11 where is covered by the free part of the cover 12.

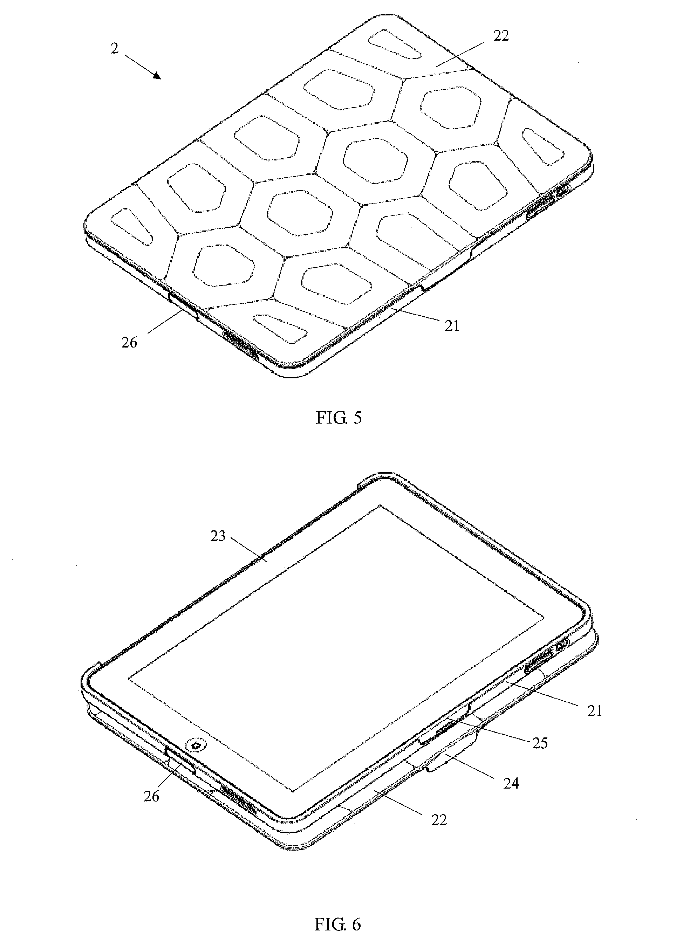

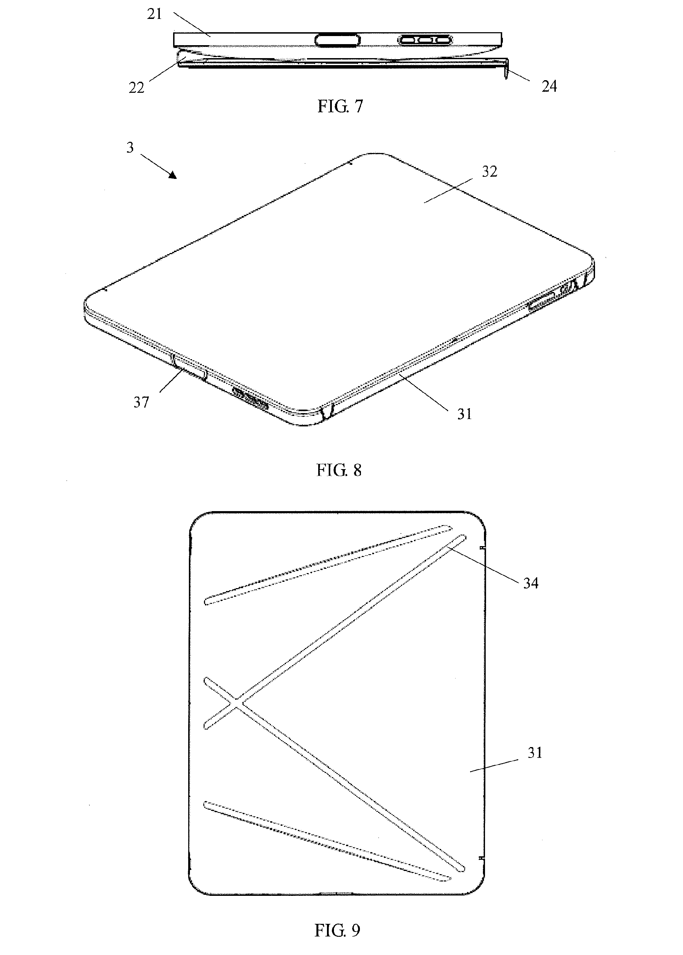

As shown in Fig. 5, the second embodiment 2 of the combination of protective casing and stand for portable handheld electronic device of the present invention is in form of a box, which comprises a base 21 and a cover 22 pivotably connected to the base 21 at one edge thereof. The cover 22 could be connected to the base 21 by virtue of a pivot, a hinge or other means known in this art. Or, the cover 22 could be formed integrally with the base 21 and a joint part therebetween is relative thinner than the other parts, to enable the cover 22 to be pivotable with respect to the base 21. In this embodiment, the cover 22 could be opened completely with respect to the base 21, to completely press against a rear surface of the base 21, just as shown in Figs. 6 and 7. Alternatively, the cover 22 could only be rotated a certain angle with respect to the base 21, to partly press against the rear surface of the base 21 (not shown in the figures).

An inner space is formed between the base 21 and the cover 22 to contain a portable handheld electronic device 23 therein, as shown in Fig. 6. A protrusion 24 may be formed on an edge of the cover 22 opposite to the edge connected to the base 21, while a corresponding recess 25 is formed at an edge of the base 21. When the cover 22 is closed to the base 21, the protrusion 24 is inserted into the recess 25, to fasten the cover 22 to the base 21 to avoid accidental opening of the cover 22 with respect to the base 21. As shown in Fig. 5, a texture may be formed on an outer surface of the cover 22 for offering additional grip when holding the combination 2.

As shown in Fig. 7, the height of the protrusion 24 is larger than the thickness of the cover 22. When the second embodiment needs to be changed to a stand, the cover 22 is first opened with respect to the base 21 to press against the rear surface of the base 21, and then the edge of the cover 22 connected to the base 21 and the protrusion 24 are placed on a table or other plate. Therefore, the second embodiment forms a configuration at least including a triangle in a cross section taken along a transversal central line of thereof. As a result, a stable stand is formed for supporting the electronic device 23.

The base 21 and the cover 22 could be provided with a plurality matching openings 26 for external access to buttons, switches and ports on the electronic device 23, for instance, headphone jack, charging port, docking port, on/off switch, scroll button, opening for camera, etc.

Similar to the second embodiment 2 as mentioned above, the third embodiment 3 of the combination of protective casing and stand for portable handheld electronic device of the present invention is in form of a box, which also comprises a base 31 and a cover 32. The relationship between the base 31 and the cover 32 of the third embodiment is similar to that in the second embodiment, and the details of which would not be repeated herein.

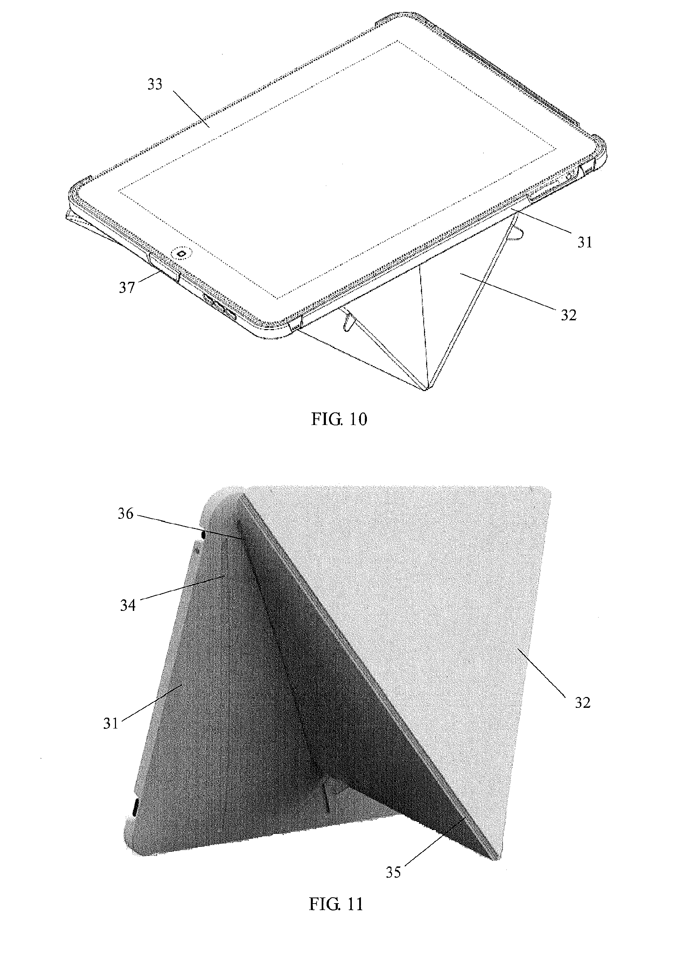

There is also an inner space formed between the base 31 and the cover 32 to contain a portable handheld electronic device 33 therein, as shown in Fig. 10.

One or more pairs of grooves 34 could be formed on an outside surface of the base 31, each of which is used for receiving the two side edges 36 of the cover. In this connection, the cover is made of flexible materials, such as rubber, plastics or other suitable materials, to enable to be bended. For example, there are two pairs of grooves 34 formed on the outside surface of the base 31, as shown in Fig. 9.

On an inner surface of the cover 32, a pair of notches 35 could be formed, each of which extends from an individual corner of the cover adjacent to the edge of the cover connected to the base to a middle part of an opposite edge of the cover. The thickness of the cover in the notches is relatively thinner than the other part of the cover. Therefore, it would be easier to bend the cover along the notches 35.

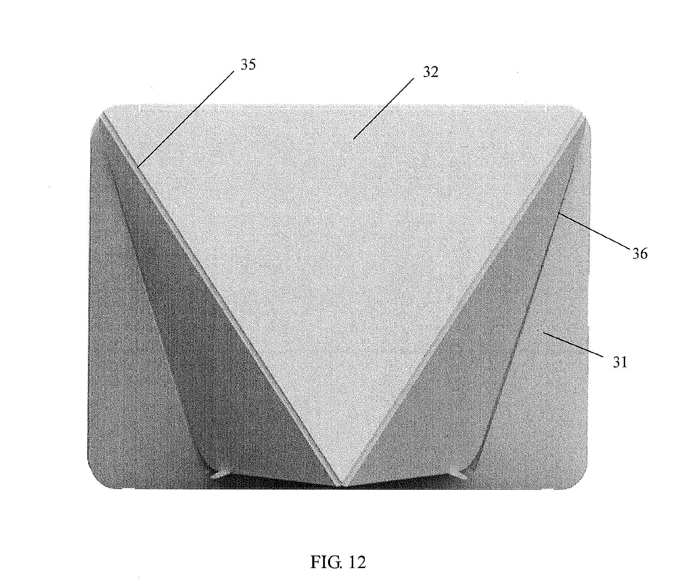

As shown in Figs. 11 and 12, after the cover 32 is opened with respect to the base 31, the cover 32 is bended along the pair of notches 35, and then the two side edges 36 of the cover 32 are inserted into either pair of grooves 34 on the outside surface of the base 31. Finally, an edge of the base 31 opposite to the cover 32 and the middle part of the edge of the cover opposite to the base could be placed on a table or other plate. Therefore, the third embodiment forms a configuration at least including a triangle in a cross section taken along a transversal central line of thereof. As a result, a stable stand is formed for supporting the electronic device 33.

If more than one pair of grooves 34 is formed in the outside surface of the base 31, the side edges of the cover 32 could be inserted into different pair of grooves, to form a stand with a different arrangement.

Similarly, the base 31 and the cover 32 could also be provided with a plurality matching openings 37 for external access to buttons, switches and ports on the electronic device 33, for instance, headphone jack, charging port, docking port, on/off switch, scroll button, opening for camera, etc.

Although some embodiments of the present invention have been shown and described with reference to the accompanying drawings, those skilled in the art should understand that various changes and modifications can be made to the embodiments without departing the principles and spirits of the present invention and they still fall into the scope of claims and the equivalent thereof.

## Claims

1. A combination of protective casing and stand for portable handheld electronic device comprising a base and a cover pivotably connected to the base, wherein an inner space is formed between the base and the cover for containing the electronic device, and the cover could be pivoted with respect to the base to make the combination to form a configuration at least including a triangle in a cross section taken along a central line of the combination.

2. The combination of protective casing and stand according to claim 1, wherein the combination is in form of a pocket, and the cover comprises a fixed part attached to the base fixedly and being pivotable together with the corresponding part of the base with respect to the rest of the base and a free part covering the base and being pivotable with respect to the base freely.

3. The combination of protective casing and stand according to claim 2, wherein at least one first fastener is formed between the base and the free part of the cover for fastening the base and the free part selectively.

4. The combination of protective casing and stand according to claim 3, wherein a tab extends outwards from the base at an end of the fixed part of the cover, and at least one second fastener is formed between the tab and the fixed part of the cover for fastening the tab and the fixed part selectively.

5. The combination of protective casing and stand according to claim 4, wherein the part of the first fastener formed on the free part of the cover could be engaged with the part of the second fastener formed on the tab, to fasten the free part of the cover and the tab selectively.

6. The combination of protective casing and stand according to claim 2, wherein one or more ribs are formed on the base where is covered by the free part of the cover.

7. The combination of protective casing and stand according to claim 1, wherein the combination is in form of a box, and the cover is pivotably connected to the base at one edge thereof and a protrusion is formed on an edge of the cover opposite to the edge connected to the base, in which the height of the protrusion is larger than the thickness of the cover.

8. The combination of protective casing and stand according to claim 7, wherein a recess is formed at an edge of the base for containing the protrusion when the cover is closed to the base.

9. The combination of protective casing and stand according to claim 7, wherein a texture is formed on an outer surface of the cover.

10. The combination of protective casing and stand according to claim 1, wherein the combination is in form of a box, and one or more pairs of grooves are formed on an outside surface of the base and each of the pairs is used for receiving the two side edges of the cover.

11. The combination of protective casing and stand according to claim 10, wherein the cover is made of flexible materials.

12. The combination of protective casing and stand according to claim 11, wherein a pair of notches is formed on an inner surface of the cover and each of the notches extends from an individual corner of the cover adjacent to the edge of the cover connected to the base to a middle part of an opposite edge of the cover, in which the thickness of the cover in the notches is relatively thinner than the other part of the cover.

13. The combination of protective casing and stand according to claim 7 or 10, wherein the base and the cover are provided with a plurality matching openings for external access to buttons, switches and/or ports on the electronic device.
